# EUROPEAN PATENT APPLICATION

(11) **EP 1 039 402 A2**
(43) Date of publication of application: **27.09.2000**
(21) Application number: 00200960.3
(22) Date of filing: 17.03.2000
(51) Int. Cl.: G06F 17/60

(54) **Systems and methods of electronic payment and financing the same**

(30) Priority: 19.03.1999 US 125155 P; 26.03.1999 US 126524 P
(71) Applicant: CITIBANK, N.A., New York, New York 10043 (US)
(72) Inventor: Katis, Thomas E., San Francisco, CA 94123 (US)
(74) Representative: Hynell, Magnus

(57) **Abstract**

A system and method are described wherein a financial institution establishes an electronic card account on its own computer. The financial institution issues digital bearer certificates to a consumer for use in making purchases over a network. The digital bearer certificates are stored on a financial institution's computer until the consumer instructs the computer to forward one to a merchant when purchasing a good or service. In addition to maintaining these digital bearer certificates, the electronic card account also holds credit card numbers for use in making purchases over the network. Finally, the financial institution receives money for the digital bearer certificates up front so that it may invest that money for profit.

## Description

### CONTINUING DATA

This application claims priority to United States provisional application number 60/125,155 filed on March 19, 1999, and United States provisional application number 60/126,524 filed on March 26, 1999, both of which are incorporated herein by reference.

### RELATED PATENT APPLICATIONS

The application is related to co-pending United States provisional application number 60/081,748 filed on April 14, 1998 and United States utility application number 09/190,727 filed on November 12, 1998, the disclosures of which are incorporated herein by reference.

### FIELD OF THE INVENTION

The present invention relates to systems and methods for creating an electronic system and method for allowing consumers to make transactions. In addition, a financing system and method are described to support this electronic system and method of making transactions.

### BACKGROUND OF THE INVENTION

The growth of the Internet has gone hand-in-hand with the growth of electronic commerce (e-commerce). Millions of people are making purchases of goods and services over the Internet. To facilitate these purchase, a plurality of payment schemes have been established. While these payment schemes have advantages, they all suffer from drawbacks as well.

Probably the most widely used system is the credit card. A consumer may use his/her credit card in one of two ways. The first is to enter the credit card number into the merchant's site. This operation is like using the credit card at a store. The merchant site, like the cashier's terminal at the store, accepts the number and requests authorization to allow the transaction. If the transaction is approved, the consumer receives the goods or services purchased. While this method of performing a transaction is acceptable, it also has drawbacks. The first is reduced security. Unless the Web browser is configured by the merchant site or by a plug-in to encrypt the credit card number, the consumer's credit card number is transmitted across the Internet in an unsecured fashion. This makes it possible for someone to intercept the messages and retrieve the credit card number.

It should also be noted that the transaction costs of purchasing inexpensive items using the above described credit card system are too prohibitive to be effective. Therefore, merchants of inexpensive goods and services cannot effectively use the Internet.

Another method of making purchases over the Internet uses what is called a notational system. This system relies on a third party to clear transactions. Both consumers and merchants register with this third party. The consumer buys tokens that are held in an electronic wallet. When the consumer purchases something from a merchant, a message is sent to the third party indicating that consumer X has forwarded Y tokens to merchant Z. The third party then reallocates hinds from the consumer's account over to the merchant account. Whenever the merchant desires to liquidate its account, it does so and receives the money from the third party. The third party typically receives money from the customer via a credit card.

This form of electronic payment has as its advantages in that small increments of exchange are possible (i.e., less than $1). By allowing a merchant to collect hundreds of 50 cent purchases, it becomes worth-while for the merchant to incur the transaction costs of the third party to liquidate the accumulated funds. Similarly, the consumer purchases a batch of tokens and incurs fees associated with buying the tokens. Therefore, spending the tokens on inexpensive items dilutes the transaction costs over a larger pool of transactions.

Another form of electronic payment involves the use of digital bearer certificates. A consumer buys the digital bearer certificates and turns them over to the merchant when a purchase is made. Is this scheme, the digital bearer certificates is like currency. Whoever is in possession of the digital bearer certificate may exchange it for goods or services. When the merchant accepts the digital bearer certificates, it performs a check with the certificate issuer to be sure that the certificate has not been copied or previously redeemed. If the digital bearer certificate has not been previously redeemed, the merchant accepts the certificate in exchange for the good or service.

The main problem with some digital bearer certificate systems is the limited acceptance of digital bearer certificates. If institution X issues a certificate to consumer Y and that consumer redeems his certificate with merchant Z, that merchant must go to institution X to exchange that digital bearer certificate for money. If the merchant is a member of institution W, it is unlikely that the merchant will accept digital bearer certificates from institution X. Thus, the use of certain digital bearer certificates is not widespread amongst Internet merchants.

In addition to these shortcomings, neither form of electronic commerce is designed to handle large purchases like credit card accounts. Thus, merchants selling very expensive items over the Internet cannot reach those customers who limit themselves to only using electronic money.

Yet another shortcoming of conventional electronic money forms of payment is the reliance on storing the electronic money on the consumer's home PC. These systems require the consumer to be home using his/her PC in order to use the electronic money. In addition, once a digital bearer certificate is downloaded onto the consumer's PC, the risk of copying a single certificate for multiple purchases increases. This therefore requires enhanced security systems to check the authenticity of the certificates.

Finally, downloading these certificates to the consumer's PC may take a long time. In addition, as these certificates are bought and used, constant updates by the financial institution are required.

### SUMMARY OF THE INVENTION

The present invention solves the above problems by providing a system and method a consumer may use to make purchases of various sizes without relying on forms of payment stored on a personal computer.

### BRIEF DESCRIPTION OF THE DRAWINGS

The accompanying drawings, which are incorporated in and form a part of the specification, illustrate preferred embodiments of the present invention and, together with the description, disclose the principles of the invention.
Figure 1 is a diagram of a system according to an embodiment of the present invention.
Figure 2 is a flowchart representative of a method in accordance with an embodiment of the present invention.
Figure 3 is an exemplary screen used in an embodiment of the present invention.
Figure 4 is another exemplary screen used in an embodiment of the present invention.

### DETAILED DESCRIPTION OF THE DRAWINGS

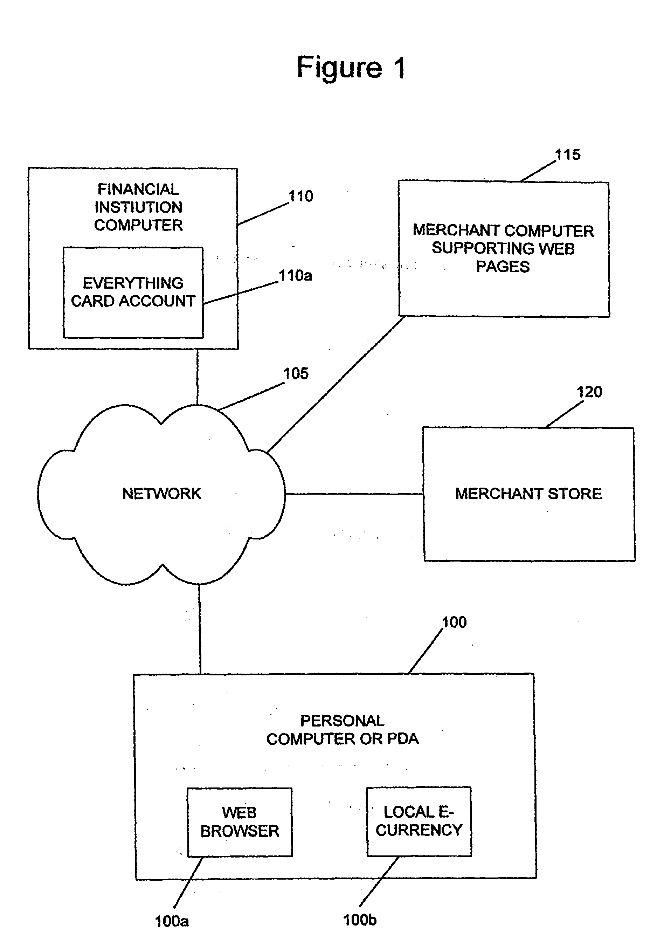

Figure 1 shows a system for implementation of an embodiment of the present invention. Personal computer (PC) 100 includes a Web browser 100a and locally stored election currency 100b. Examples of Web browsers include Netscape's Navigator™ and Microsoft's Internet Explorer™. PC 100 typically is coupled to network 105 via a modem and an Internet Service Provider (ISP) system (not shown). In a preferred embodiment, the network is a publicly accessible network such as the Internet. It should be noted that in alternative embodiments, the PC 100 is implemented using a Web television capable of interfacing with the Internet as well as various hand-held devices that support Web browsing like mobile telephones and personal digital assistants (PDAs). In alternative embodiments, consumers may use an automatic teller machine (ATM) to access the electronic card account of the present invention.

Also coupled to the network 105 is financial institutional computer 110, merchant server 115 and merchant store 120. Financial institutional computer 110 includes electronic card account software 110a.

As will be described in greater detail below, the consumer downloads a Web page advertising a good or service provided by a merchant. If the consumer wishes to buy that good or service, he/she uses the electronic card account 110a stored on financial server 110 in order to purchase the advertised good or service.

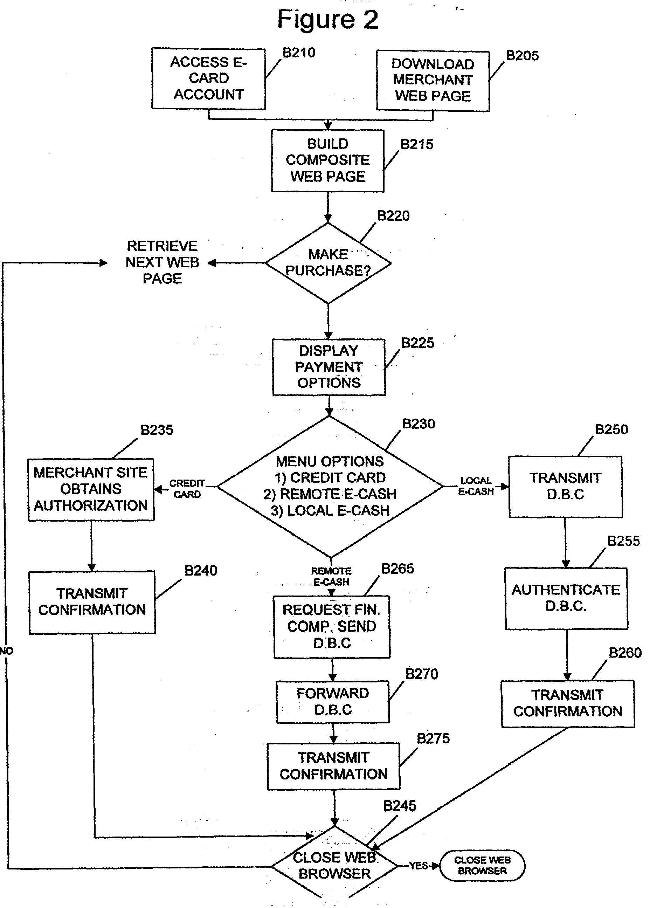

Figure 2 shows a process the present invention goes through when a consumer makes a purchase. At block B205, the consumer downloads a merchant Web page advertising a particular good or service from merchant computer 115 onto PC 100. At block B210, the consumer accesses the electronic card account 110a stored on financial computer 110 from PC 100. By accessing electronic card account 110a, Web browser 100a receives the value of the electronic currency stored therein and not copies of the digital bearer certificates. The dashed arrows between blocks B205 and B210 indicate that the consumer may access the electronic card account 110a first and download the merchant Web page second. In yet an alternative method of the present invention, the financial computer 110 acts as a portal to other Web sites such as those supported by merchant computer 115 when the consumer accesses electronic card account 110a.

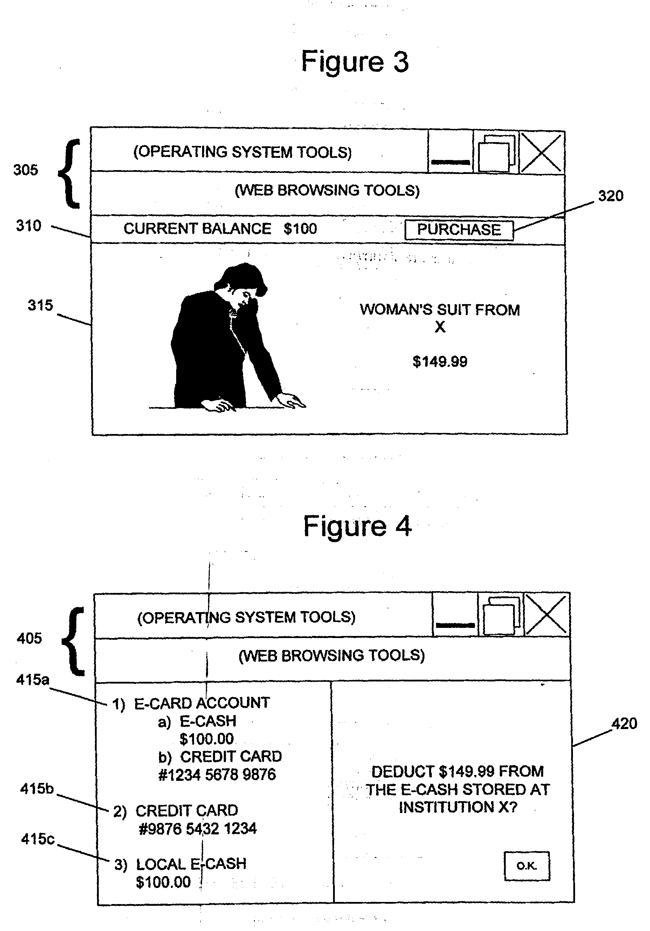

Regardless of the order of accessing electronic account 110a and downloading the merchant Web page, at block B215 Web browser 100a combines the two into a composite screen for viewing by the consumer. An example of such a screen is shown in Figure 3. At block B220, the consumer decides to either purchase the advertised good or service or not. If the consumer does not wish to purchase this particular good or service, or exits Web browser 100a, he/she clicks or enters another Universal Resource Locator (URL) at block B245.

If the consumer does wish to purchase the advertised good or service at block B220, he/she clicks on a button, like button 320, shown in Figure 3. The Web browser responds by displaying the various payment options available to the consumer as shown in Figure 4 at block B225. In a preferred embodiment of the present invention, this is accomplished by running a JAVA applet, or equivalent, that displays another Web page like the one shown in Figure 4. As shown in Figure 4, the payment options comprise three types. The first type 415a includes the payment options available from electronic card account 110a that are stored on financial server 110. The second type of payment option 415b is the use of a credit card. The third type of payment option 415c is the use of electronic money 110b stored on the hard drive or other local memory of PC 100.

At block B230, the consumer selects one of the displayed payment options. In response, a message is sent from PC 100 to merchant computer 115 indicating that the consumer wishes to purchase the advertised good or service.

If at block B230, the consumer selects a credit card account as the method of payment, merchant computer 115 receives the credit card number. Merchant computer 115 then obtains the necessary authorization for the credit card account at block B235. At block B240, merchant computer 115 sends a message back to PC 100 indicating that the purchase has been authorized and the process ends. After the consumer receives confirmation, the process goes to block B245, where the consumer may select another URL or close Web browser 110a.

If at block B230, the consumer selects electronic currency 100b stored locally on PC 100, Web browser 100a transmits a digital bearer certificate(s) to merchant sewer 115 at block B250. Merchant computer 115 authenticates the digital bearer certificate(s) at block B255 with the institution from which it was issued. In a preferred embodiment, this institution is the same as the institution supported by computer 110. At block B260, merchant computer 115 sends a message to PC 100 informing the consumer that the purchase was approved. The process continues at block B245, where the consumer may select another URL or close Web browser 100a.

If at block B230 the consumer selects use of electronic card account 110a stored on financial computer 110, Web browser 100a will forward a request to financial computer 110 to forward the appropriate digital bearer certificate(s) to the merchant computer 115 at block B265. When financial computer 110 receives this request, it authorizes the request and then forwards the digital bearer certificate(s) to merchant server 115 at block B270. At block B275, merchant site 115 sends confirmation of receipt of the digital bearer certificate(s) to financial computer 110 and a message to PC 100 informing the consumer that the purchase has been made. The process continues at block B245, where the consumer may select another URL or close Web browser 100a.

This method provides several advantages over other methods. First, the digital bearer certificates remain in the control of financial computer 110 until the purchase is made. This means that the security of the digital bearer certificates is enhanced because the consumer never receives them and cannot therefore make unauthorized copies. This leads into the second benefit of reduced time to process the transaction. In other types of electronic payment schemes, the consumer transmits the digital bearer certificates to merchant computer 115 and merchant computer 115 must authenticate with financial computer 110 that these digital bearer certificates are not copies or counterfeit certificates.

Another advantage of the present invention is the multiple payment forms available to the consumer. He/she may select among the available types (i.e., local digital bearer certificates, electronic card account digital bearer certificates or credit cards) to effect the payment.

Another advantage of having financial computer 110 maintain control over the digital bearer certificates is the increased security that allows merchants and third parties to offer incentive programs. As an example, suppose an airline company offers frequent flyer miles for those individuals who make purchases using the digital bearer certificates stored in electronic card account 110a. For every $5 spent, the consumer will collect 1 frequent flyer mile. The airline company will be confident that this incentive program is secure and that digital bearer certificates will not be copied/counterfeited because the financial computer 110 will maintain control over the digital bearer certificates.

In addition, the third party may change its incentive program when it wishes, without requiring the financial institution to reprogram financial computer 110. This is because financial computer 110 performs periodic batch dumping of data to the third party computer and the third party computer performs calculations to determine what each consumer receives in incentives. Thus, if the airline company wants to offer only one frequent flyer mile for every $10 spent, only the airline company's computer needs to be reprogrammed, and not the financial institution's.

Another method of purchasing goods and services using an embodiment of the present invention involves using computer terminal 120 located at the merchant's store. When the consumer has decided on whatever good(s) or service(s) he/she wishes to buy, the consumer brings them to a cashier's table equipped with a computer terminal. Either the consumer or a store employee enters the appropriate data set forth in the process shown in Figure 2 to effect payment for the good(s) or service(s).

This method of payment may be somewhat different if the consumer does not have a smart card or PDA with digital bearer certificates stored therein that can interface with a terminal at merchant store 120. If there is no "local" form of payment, the consumer will, by default, be required to select the payment forms offered by electronic card account 110a stored on financial computer 110. This means that the consumer will be unable to go through blocks B250-B260 of Figure 2.

### Financing

In a preferred embodiment of the present invention, the digital bearer certificates stored on financial computer 110 in electronic card account 110a are pre-purchased. In other words, the consumer buys five $20 digital bearer certificates at one time. By accepting the money up front, the financial institution may invest it.

For example, suppose 900 customers add $100 each to their respective cash portions of the electronic card accounts on January 1. On January 1, the financial institution is $90,000 richer but also incurs the liability of paying out the money spent by those customers at merchant stores or merchant Web sites. The financial institution therefore has use of this $90,000 until the various customers begin spending the money at various merchant stores and Web sites.

In the aggregate, most customers will not spend any portion of the $100 added to the electronic card account immediately. As an example, assume one-third spend a portion of the $100 within 5 days, another third will spend the money about 2 weeks after adding it to electronic card account 110a and the last third won't spend the money until about 4 weeks after adding it to the electronic card account 110a.

The financial institution is required to pay out the value of the redeemed digital bearer certificate when requested to do so by a merchant seeking indemnification. Using the averages above, the financial institution must keep $30,000 in liquid assets so as to be able to indemnify those merchants who have goods or services purchased from them by consumers who have spent portions of their electronic cash within 5 days of depositing it. However, for the other groups of consumers, the financial institution may invest the other $60,000 as long as the principal is returned with 15 and 30 days, respectively. If the financial institution buys a 30 day bond, the principal will be returned the day that bond matures and the financial institution will keep the interest earned. Thus, by having consumers buy the digital bearer certificates up front and store them on their respective electronic card accounts described above, a financial institution gains the use and investing benefits of that money.

## Claims

1. A method of purchasing goods and services comprising:
receiving a request to transmit a digital bearer certificate at a computer controlled by an institution; and
transmitting the digital bearer certificate to a destination.

2. A method of paying for a good or service comprising:
providing a plurality of payment choices to a consumer;
receiving a selection of one of the plurality of payment choices; and
forwarding first data indicative of the one of the plurality of payment choices.

3. The method of claim 2, wherein the plurality of payment choices comprises:
a credit card account; and
a digital bearer certificate.

4. The method of claim 2 further comprising:
forwarding second data indicative of an amount of the one of the plurality of payment choices.

5. A method of financing an electronic form of payment comprising:
receiving money in exchange for issuing a digital bearer certificate;
investing the received money; and
either retaining enough liquid assets to indemnify the digital bearer certificate or receiving a return from an investment to indemnify the digital bearer certificate.
